# EUROPÄISCHE PATENTSCHRIFT

(11) **EP 1 286 062 B1**
(45) Veröffentlichungstag und Bekanntmachung des Hinweises auf die Patenterteilung: **31.08.2005**
(21) Anmeldenummer: 01810811.8
(22) Anmeldetag: 21.08.2001
(51) Int. Cl.: F16B 13/14

(54) **Chemischer Spreizdübel**
Chemical expansion dowel
Cheville d'expansion chimique

(43) Veröffentlichungstag der Anmeldung: 26.02.2003
(73) Patentinhaber: HILTI Aktiengesellschaft, 9494 Schaan (LI)
(72) Erfinder: Bisping, Heinz, 86163 Augsburg (DE); Kölbl, Alois, 86807 Buchloe (DE); Wieser, Jürgen, 86916 Kaufering (DE); Zimmerer, Claudia, 86153 Augsburg (DE)
(74) Vertreter: Wildi, Roland

(56) Entgegenhaltungen:
- DE-A- 4 004 207
- DE-U- 8 513 347
- DE-U- 8 613 998
- US-A- 3 702 060

## Beschreibung

Die Erfindung betrifft eine Befestigungsvorrichtung mit einer Aufnahmehülse zur zumindest teilweisen Aufnahme einer aushärtbaren Mörtelmasse, wobei die Aufnahmehülse am setzrichtungsseitig abgewandten Ende eine Führungshülse mit einer Durchgangsbohrung, zur Führung eines zumindest teilweise mit einer Aussenprofilierung versehenen Befestigungselements, aufweist. In der Durchgangsbohrung der Führungshülse ist zumindest teilweise ein Spreizelement gelagert, das am Befestigungselement festlegbar ist. Die Führungshülse ist durch das Spreizelement zumindest teilweise radial aufweitbar.

Chemische Befestigungsvorrichtungen der oben genannten Art finden beispielsweise Anwendung in einem Hohlräume aufweisenden Untergrund. Herkömmliche Befestigungsmittel, die beispielsweise durch radiales Aufweiten einer Spreizhülse reibschlüssig in einer Bohrung festlegbar sind, gewährleisten für diesen Untergrund oft unzureichende Lastwerte. Durch die Anwendung eines Befestigungsmittels mit einer Aufnahmehülse, zur Aufnahme einer härtbaren Mörtelmasse, besteht zwischen der Aufnahmehülse und der Bohrung eine formschlüssige Verbindung, die durch die gehärtete Mörtelmasse gebildet ist. Beim Setzvorgang des Befestigungsmittels wird zunächst ein Bohrloch im Untergrund erstellt und die Aufnahmehülse ins Bohrloch eingeführt. Dann wird beispielsweise mittels eines Auspressgerätes die Mörtelmasse in die Aufnahmehülse befördert. Die Mörtelmasse wird beispielsweise durch eine Vielzahl von radialen, in der Aufnahmehülse angeordneten Öffnungen zumindest im Bohrloch verteilt. Nach dem Aushärten der Mörtelmasse kann beispielsweise ein Bauteil durch ein Befestigungselement, beispielsweise einer Ankerstange, mittels der Aufnahmehülse am Untergrund befestigt werden.

Aus der DE4004207 ist eine derartige Befestigungsvorrichtung mit einer Aufnahmehülse die eine Vielzahl von radialen Öffnungen aufweist bekannt. Am setzrichtungsseitig abgewandten Ende weist die Aufnahmehülse eine Führungshülse mit einer Durchgangsbohrung auf. Ferner weist die Führungshülse ein oder mehrere Längsschlitze auf, die beim Einführen eines Befestigungselements, beispielsweise einer Ankerstange, zu einer radialen Aufweitung der Führungshülse führt.

Nachteilig an der bekannten Lösung ist, dass beim Einführen des Befestigungselements in die Führungshülse der Aufnahmehülse eine nicht unerhebliche Kraft aufgewendet werden muss. Ausserdem ist es beispielweise möglich, dass sich die Aufnahmehülse durch die auf sie einwirkende Kraft verschiebt und sich eine nachträgliche Neupositionierung schwer bis unmöglich gestaltet.

Ferner ist an der bekannten Lösung nachteilig, dass eine durch das Einführen des Befestigungselements bewirkte Vorfixierung nicht zur Aufnahme von grösseren Lasten geeignet ist.

Aus der US 3,702,060 A) ist eine Befestigungsvorrichtung mit einer Aufnahmehülse bekannt, in welcher eine Harz beinhaltende Kapsel und eine einen Härter beinhaltende Kapsel vorgesehen sind. Die Aufnahmehülse weist am setzungsseitig abgewandten Ende eine radial aufweitbare Führungshülse mit einer Durchgangsbohrung zur Führung eines mit einer Aussenprofilierung versehenen Befestigungselements auf. In der Durchgangsbohrung der Führungshülse ist zumindest teilweise ein Spreizelement mit einer Gewindebohrung zur Aufweitung der Führungshülse gelagert, wobei das Befestigungselement am Spreizelement festlegbar ist. Beim Einschrauben des Befestigungselements in das Spreizelement werden die Kapseln in der Aufnahmehülse zerstört und die darin enthaltenen Komponenten zu einer aushärtbaren Klebemasse vermischt. Die freigesetzte Klebemasse verklebt die aufgeweitete Führungshülse mit der Bohrlochwandung.

Nachteilig an der bekannten Lösung ist, dass das Befestigungselement mittels mehreren Umdrehungen in die Gewindebohrung des Spreizelementes eingeschraubt werden muss, was einen beträchtlichen Zeitaufwand zur Anordnung und Justierung des Befestigungselements bedingt. Da die aushärtbare Klebemasse erst beim Eindrehen des Befestigungselements aktiviert wird, muss zur Gewährleistung einer ausreichenden Vermischung der einzelnen Komponenten der Klebemasse die Zerstörung der in der Aufnahmehülse befindlichen Kapseln gezielt und gesteuert erfolgen. Zudem erfolgt bei dieser Befestigungsvorrichtung die Fixierung nur im Bereich der mit dem Bohrloch verklebten Führungshülse, so dass unter Belastung unerwünschte Spannungsspitzen auftreten.

Der vorliegenden Erfindung liegt die Aufgabe zugrunde, eine Befestigungsvorrichtung mit einer Aufnahmehülse zu schaffen, die eine Belastung der Befestigungsvorrichtung ohne Aushärtung einer eingebrachten Mörtelmasse ermöglicht und ferner eine handliche Justierung beim Setzvorgang sicherstellt.

Erfindungsgemäss wird die Aufgabe dadurch gelöst, dass das Spreizelement radial aufweitbar ist, und dass die Führungshülse und das Spreizelement durch eine Verliersicherung miteinander gekoppelt sind.

Dadurch, dass in der Durchgangsbohrung der Führungshülse zumindest teilweise ein Spreizelement gelagert ist, ist eine hohe Belastbarkeit der Befestigungsvorrichtung vor dem Aushärten der Mörtelmasse gewährleistet. Ferner erfolgt eine radiale Aufweitung der Führungshülse erst bei Belastung des Befestigungselements durch eine entgegen einer Setzrichtung wirkenden Last. Beim Setzvorgang ist daher von einem Anwender keine Kraft zum Verspreizen der Führungshülse aufzubringen, womit eine hohe Handlichkeit der Befestigungsvorrichtung sichergestellt ist. Die Aufnahmehülse kann beispielweise mit einer Vielzahl von radialen Öffnungen aufweisen, die als Kanäle für die Mörtelmasse dienen. Beim Einbringen der Mörtelmasse in die Aufnahmehülse verteilt sich die Mörtelmasse an der Aussenkontur der Aufnahmehülse und dadurch zur Bohrung offenen Hohlräume mit Mörtelmasse aus. Eine weitere Möglichkeit ist beispielsweise die Aufnahmehülse verformbar und/oder elastisch zu gestalten, durch das Einbringen der Mörtelmasse passt sich die Aussenkontur der Aufnahmehülse der Bohrung und der zur Bohrung offenen Hohlräume an. In beiden Ausführungen ist die Befestigungsvorrichtung formschlüssig in der Bohrung, und somit im Untergrund, verankert.

Die Führungshülse und das Spreizelement sind durch eine Verliersicherung miteinander gekoppelt, um ein Verlieren des Spreizelements während des Transports desselben oder während dem Setzvorgang zu vermeiden. Die Führungshülse und das Spreizelement sind beispielsweise durch Sollbruchstelle miteinander verbunden. Eine andere Ausführung ist beispielsweise, dass die Führungshülse am setzrichtungsseitigen Ende einen Käfig aufweist, der ein Herausfallen des Spreizelements verhindert.

Das Spreizelement ist vorzugsweise axial beweglich in der Führungshülse gelagert, um eine radiale Aufweitung der Führungshülse durch eine am Befestigungselement angreifende Last zu ermöglichen.

Vorteilhafterweise ist das Spreizelement im setzrichtungsseitigen Endbereich der Führungshülse gelagert, um einen maximalen Weg beim Verspreizen des Spreizelements in der Führungshülse sicherzustellen.

Vorzugsweise weist das Spreizelement eine sich entgegen der Setzrichtung verjüngende, konisch ausgebildete Aussenkontur auf, die auf eine einfache Art und Weise das radiale Aufweitung der Führungshülse ermöglicht und eine wirtschaftliche Herstellung der Befestigungsvorrichtung sicherstellt.

Das Spreizelement weist vorteilhafterweise eine mit einer Innenprofilierung versehene Aufnahmebohrung auf, um ein einfaches und formschlüssiges und/oder reibschlüssiges Festlegen des Befestigungselements am Spreizelement sicherzustellen.

Vorzugsweise ist das Spreizelement axial zu dessen Aufnahmebohrung in mehrere Spreizsegmente unterteilt, die gegeneinander radial zur Aufnahmebohrung vorgespannt sind. Durch die federnden Spreizsegmente ist ein einfaches Festlegen des Befestigungselements mit dem Spreizelement gewährleistet. In einer weiteren Ausführung weist das Befestigungselement zumindest teilweise eine Aussenprofilierung auf, um eine formschlüssige Verbindung zwischen dem Spreizelement und dem Befestigungselement zu ermöglichen.

Der Endbereich der Aufnahmebohrung weist vorteilhafterweise am setzrichtungsseitigen Ende eine sich entgegen der Setzrichtung konisch verjüngende Innenkontur auf, um eine präzise Führung und eine automatische Zentrierung des Spreizelements in der Durchgangsbohrung der Führungshülse zu gewährleisten.

Die Erfindung wird nachstehend anhand eines Ausführungsbeispieles näher erläutert. Es zeigen:
- Fig. 1: einen Längsschnitt durch eine erfindungsgemässe Befestigungsvorrichtung mit einer starren Aufnahmehülse;
- Fig. 2: einen Querschnitt des Spreizelements der in Fig. 1 dargestellten Befestigungsvorrichtung mit auseinandergespreizten Spreizsegmenten;
- Fig. 3: einen Querschnitt des Spreizelements der in Fig. 1 dargestellten Befestigungsvorrichtung mit Spreizsegmenten im Eingriff mit einem Befestigungselement.
- Fig. 4: ein Längsschnitt durch eine weitere erfindungsgemässe Befestigungsvorrichtung mit einer flexiblen Aufnahmehülse;

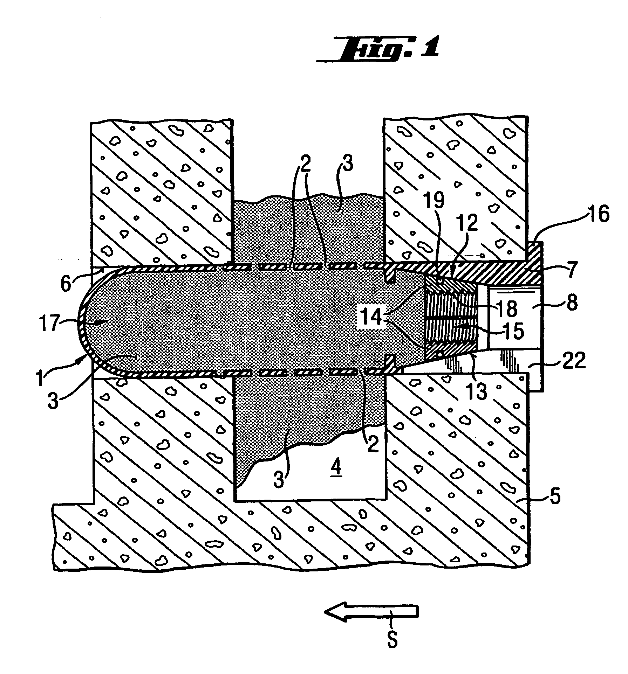

In den Fig. 1 bis 3 eine erste Ausführungsformen einer erfindungsgemässen Befestigungsvorrichtung mit einer eine Vielzahl von radialen Öffnungen 2 aufweisenden, insgesamt mit 1 bezeichneten, Aufnahmehülse zur zumindest teilweisen Aufnahme einer aushärtbare Mörtelmasse 3 dargestellt. Die Aufnahmehülse 1 ist einem, Hohlräume 4 aufweisenden, Untergrund 5 in einem Bohrloch 6 eingeführt.

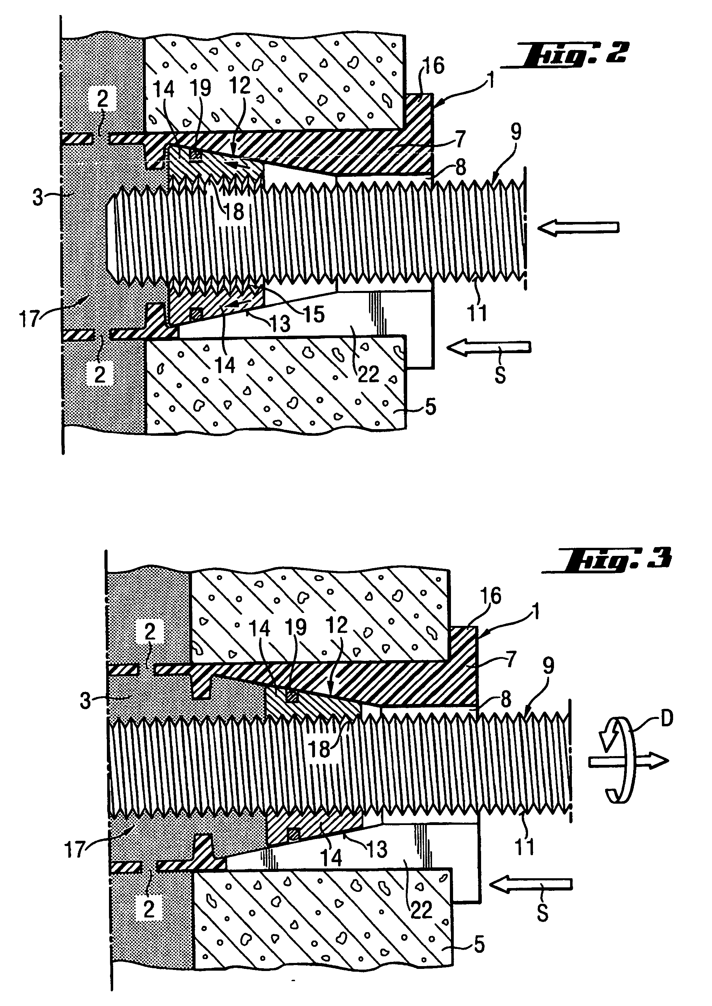

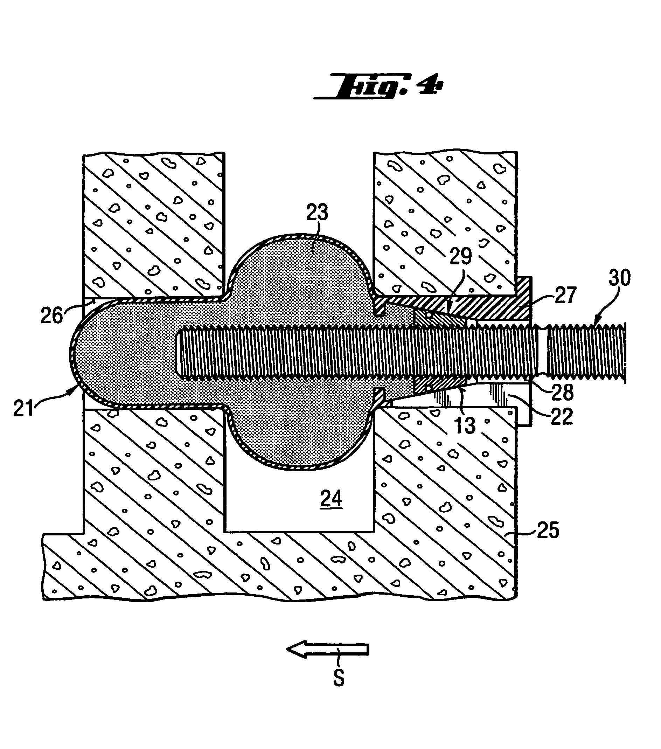

Die Aufnahmehülse 1 weist auf dem setzrichtungsseitig abgewandten Ende eine Führungshülse 7 mit einer Durchgangsbohrung 8, zur Führung eines zumindest teilweise mit einer Aussenprofilierung 11 versehenen Befestigungselement 9 auf, der aus Gründen der Übersichtlichkeit in Fig. 1 nicht dargestellt ist. In der Führungshülse 7 ist zumindest teilweise ein, axial zu derselben bewegbares, Spreizelement 12 gelagert, das am Befestigungselement 9 festlegbar ist, wie dies insbesondere in den Fig. 2 und 3 dargestellt ist. Die Durchgangsbohrung 8 der Führungshülse 7 weist am setzrichtungsseitigen Endbereich eine zur Aussenkontur 13 des Spreizelements 12 komplementär ausgebildete Innenkontur auf, der zur Aufnahme des Spreizelements 12 dient.

Das, insbesondere in Fig. 2 und 3 dargestellte Spreizelement 12 weist eine mit einer Innenprofilierung 18 versehene Aufnahmebohrung 15 auf. Axial zur Aufnahmebohrung ist das Spreizelement 12 in mehrere Spreizsegmente 14 unterteilt, die gegeneinander radial zur Aufnahmebohrung 15, beispielweise durch einen O-Ring 19, vorgespannt sind. Das Spreizelements 12 weist eine sich entgegen der Setzrichtung verjüngende, konisch ausgebildete Aussenkontur 13 auf.

Beim Setzvorgang der erfindungsgemässen Befestigungsvorrichtung wird zunächst im Untergrund 4 das zylinderförmige Bohrloch 6 erstellt. Dann wird die Aufnahmehülse 1 in Setzrichtung S in das Bohrloch 6 eingebracht. Als Setztiefenkontrolle weist die Aufnahmehülse 1 am setzrichtungsseitigen Ende beispielsweise einen den übrigen Aussenumfang zumindest teilweise überragenden Kragen 16 auf. Durch beispielsweise ein nicht dargestelltes Auspressgerät wird Mörtelmasse durch die Aufnahmebohrung 15 in den Innenraum 17 der Aufnahmehülse eingebracht, die durch die Öffnungen 2 in das Bohrloch 6 und die Hohlräume 4 fliesst. Drauffolgend wird durch die Aufnahmebohrung 15 das Befestigungselement 9 in das Spreizelement 12 geschoben. Die Aussenprofilierung 11 des Befestigungselements 9 greift formschlüssig in die Innenprofilierung des Spreizelements 12. Die Bewegung des Befestigungselements 9 in Setzrichtung S führt zu einem radialen wegdrücken der Aufnahmebohrung 15 bildenden Spreizsegmente 12 entgegen der Federkraft, welche die einzelnen Spreizsegmente zur Längsachse der Aufnahmebohrung 15 vorspannt. Durch eine Drehbewegung des Befestigungselements 9 in eine Drehrichtung D kann der Befestigungselement 9 relativ zum Spreizelement 12 wieder entgegen der Setzrichtung S bewegt werden, um eine Justierung entgegen der Setzrichtung S sicherzustellen. Entspricht die Position des Befestigungselements 9 der gewünschten Position, kann am Befestigungselements 9 eine Last angebracht werden. Die entgegen der Setzrichtung S wirkende Last führt zu einer Verschiebung des am Befestigungselement 9 festgelegten Spreizelements 12 entgegen der Setzrichtung S und durch die Aussenkontur des Spreizelements 12 resultiert ein radiales Aufweiten der Führungshülse 7, wodurch die Befestigungsvorrichtung auch im noch nicht ausgehärteten Zustand der Mörtelmasse 3 im Bohrloch 6, zumindest reibschlüssig, verankert wird. Die Führungshülse 7 kann beispielweise aus einem elastischen Material gefertigt sein oder zumindest einen, in Setzrichtung S verlaufenden, Längsschlitz aufweisen, um ein radiales Aufweiten der Führungshülse 7 zu erleichtern.

Die Führungshülse 7 und das Spreizelement 12 sind durch eine Verliersicherung miteinander gekoppelt. Die Verliersicherung kann beispielsweise als Sollbruchstelle zwischen der Führungshülse 7 und dem Spreizelement 12 ausgebildet sein.

In der Fig. 4 ist eine weitere Ausführungsform einer erfindungsgemässen Befestigungsvorrichtung mit einer verformbaren, insgesamt mit 21 bezeichneten, Aufnahmehülse zur zumindest teilweisen Aufnahme einer aushärtbaren Mörtelmasse 23 dargestellt. Die Aufnahmehülse 21 ist einem, Hohlräume 24 aufweisenden, Untergrund 25 in einem Bohrloch 26 eingeführt belastbar. Die Aufnahmehülse 21 kann beispielsweise aus einem elastischen Stoff wie Gummi oder dergleichen hergestellt sein. Die Aufnahmehülse 21 weist am setzrichtungsseitigen Ende eine Führungshülse 27 mit einer Durchgangsbohrung 28 auf. In der Durchgangsbohrung 28 ist ein parallel zur Setzrichtung S verschiebbares Spreizelement 29 mit einer sich konisch in Setzrichtung S erweiternden Aussenkontur gelagert. Die Führungshülse 27 kann beispielweise aus einem elastischen Material gefertigt sein oder zumindest einen, in Setzrichtung S verlaufenden, Längsschlitz aufweisen, um ein radiales Aufweiten der Führungshülse zu erleichtern.

## Patentansprüche

1. Befestigungsvorrichtung mit einer Aufnahmehülse (1, 21) zur zumindest teilweisen Aufnahme einer aushärtbaren Mörtelmasse (3, 23), wobei die Aufnahmehülse (1, 21) am setzrichtungsseitig abgewandten Ende eine Führungshülse (7, 27) mit einer Durchgangsbohrung (8, 28), zur Führung eines zumindest teilweise mit einer Aussenprofilierung (11, 31) versehenen Befestigungselements (9, 30) aufweist, wobei in der Durchgangsbohrung (8, 28) der Führungshülse (7, 27) zumindest teilweise ein Spreizelement (12, 29) gelagert ist, das am Befestigungselement (9, 30) festlegbar ist, und wobei die Führungshülse (7, 27) durch das Spreizelement (12, 29) zumindest teilweise radial aufweitbar ist, **dadurch gekennzeichnet, dass** das Spreizelement (12, 29) radial aufweitbar ist, und dass die Führungshülse (7, 27) und das Spreizelement (12, 29) durch eine Verliersicherung miteinander gekoppelt sind.

2. Befestigungsvorrichtung nach Anspruch 1, **dadurch gekennzeichnet, dass** das Spreizelement (12, 29) axial beweglich in der Führungshülse (7, 27) gelagert ist.

3. Befestigungsvorrichtung nach Anspruch 1 oder 2, **dadurch gekennzeichnet, dass** das Spreizelement (12, 29) im setzrichtungsseitigen Endbereich der Führungshülse (7, 27) gelagert ist.

4. Befestigungsvorrichtung nach einem der Ansprüche 1 bis 3, **dadurch gekennzeichnet, dass** das Spreizelement (12, 29) eine sich entgegen der Setzrichtung (S) verjüngende, konisch ausgebildete Aussenkontur (13) aufweist.

5. Befestigungsvorrichtung nach einem der Ansprüche 1 bis 4, **dadurch gekennzeichnet, dass** das Spreizelement (12, 29) eine mit einer Innenprofilierung (18) versehene Aufnahmebohrung (15) aufweist.

6. Befestigungsvorrichtung nach einem der Ansprüche 1 bis 5, **dadurch gekennzeichnet, dass** das Spreizelement (12, 29) axial zu dessen Aufnahmebohrung (15) in mehrere Spreizsegmente (14) unterteilt ist, die gegeneinander radial zur Aufnahmebohrung (15) vorgespannt sind.

7. Befestigungsvorrichtung nach einem der Ansprüche 1 bis 6, **dadurch gekennzeichnet, dass** der Endbereich der Aufnahmebohrung (15) am setzrichtungsseitigen Ende eine sich entgegen der Setzrichtung (S) konisch verjüngende Innenkontur aufweist.

## Claims

1. Fixing device comprising an accommodation sleeve (1, 21) for at least partial accommodation of a curable mortar substance (3, 23), and the accommodation sleeve (1, 21) comprises at the end facing away from the setting direction a guide sleeve (7, 27) with a throughbore (8, 28), for guiding a fixing element (9, 30) which is at least partially provided with an external profile (11, 31), and in the throughbore (8. 28) of the guide sleeve (7, 27) is at least partially mounted an expansion element (12, 29) which can be fixed on the fixing element (9, 30), and the guide sleeve (7, 27) can be at least partially radially expanded by the expansion element (12, 29), **characterised in that** the expansion element (12, 29) can be radially expanded, and the guide sleeve (7, 27) and the expansion element (12, 29) can be coupled by an anti-loss device.

2. Fixing device according to Claim 1, **characterised in that** the expansion element (12, 29) is mounted so as to be axially movable in the guide sleeve (7, 27).

3. Fixing device according to Claim 1 or 2, **characterised in that** the expansion element (12, 29) is mounted in the end area of the guide sleeve (7, 27) at the sitting side.

4. Fixing device according to one of Claims 1 to 3, **characterised in that** the expansion element (12, 29) has a conical outside contour (13) which narrows against the setting direction (S).

5. Fixing device according to one of Claims 1 to 4, **characterised in that** the expansion element (12, 29) comprises an accommodation bore (15) provided with an internal profile (15).

6. Fixing device according to one of Claims 1 to 5, **characterised in that** the expansion element (12, 29) is axially relative to its accommodation bore (15) divided into a plurality of expansion segments (14) which are pretensioned relative to each other radially to the accommodation bore (15).

7. Fixing device according to one of Claims 1 to 6, **characterised in that** the end area of the accommodation bore (15) comprises at the end in the setting direction an inside contour which conically narrows against the setting direction (S).

## Revendications

1. Dispositif de fixation avec un manchon de réception (1, 21) pour la réception au moins partielle d'une masse de mortier durcissable (3, 23), le manchon de réception (1, 21) comportant, à son extrémité opposée au côté direction de scellement, un manchon de guidage (7, 27) avec un trou débouchant (8, 28) pour le guidage d'un élément de fixation (9, 30) pourvu au moins partiellement d'un profilage extérieur (11, 31), un élément d'expansion (12, 29) qui peut être assujetti à l'élément de fixation (9, 30), étant logé au moins partiellement dans le trou débouchant (8, 28) du manchon de guidage (7, 27) et le manchon de guidage (7, 27) pouvant être déployé au moins partiellement par l'élément d'expansion (12, 29), **caractérisé en ce que** l'élément d'expansion (12, 29) est déployable radialement et **en ce que** le manchon de guidage (7, 27) et l'élément d'expansion (12, 29) sont accouplés l'un à l'autre par un dispositif anti-perte.

2. Dispositif de fixation selon la revendication 1, **caractérisé en ce que** l'élément d'expansion (12, 29) est monté avec une possibilité de déplacement axial dans le manchon de guidage (7, 27).

3. Dispositif de fixation selon la revendication 1 ou 2, **caractérisé en ce que** l'élément d'expansion (12, 29) est logé dans la zone d'extrêmité, côté direction de scellement, du manchon de guidage (7, 27).

4. Dispositif de fixation selon une des revendications 1 à 3, **caractérisé en ce que** l'élément d'expansion (12, 29) présente un contour extérieur (13) de conformation conique, rétréci à l'opposé de la direction de scellement (S).

5. Dispositif de fixation selon une des revendications 1 à 4, **caractérisé en ce que** l'élément d'expansion (12, 29) comporte un trou récepteur (15) pourvu d'un profilage intérieur (18).

6. Dispositif de fixation selon une des revendications 1 à 5, **caractérisé en ce que** l'élément d'expansion (12, 29) est divisé axialement à son trou récepteur (15) en plusieurs segments expansibles (14) qui sont précontraints les uns par rapport aux autres radialement au trou récepteur (15).

7. Dispositif de fixation selon une des revendications 1 à 6, **caractérisé en ce que** la zone d'extrémité du trou récepteur (15) présente, à l'extrémité côté direction de scellement, un contour intérieur à rétrécissement conique à l'opposé de la direction de scellement (S).
